# EUROPÄISCHE PATENTSCHRIFT

(11) **EP 0 904 504 B1**
(45) Veröffentlichungstag und Bekanntmachung des Hinweises auf die Patenterteilung: **28.05.2003**
(21) Anmeldenummer: 98919139.0
(22) Anmeldetag: 24.03.1998
(51) Int. Cl.: F16G 3/00

(54) **VERBINDUNGSELEMENT FÜR PROFILBEHAFTETE RIEMENENDEN**
CONNECTING ELEMENT FOR BELT ENDS HAVING A MODIFIED PROFILE
ELEMENT D'ASSEMBLAGE POUR EXTREMITES DE COURROIE A PROFIL ALTERE

(30) Priorität: 03.04.1997 DE 29705941 U
(43) Veröffentlichungstag der Anmeldung: 31.03.1999
(73) Patentinhaber: MARANTEC Antriebs- und Steuerungstechnik GmbH & Co. KG, 33428 Marienfeld (DE)
(72) Erfinder: HÖRMANN, Michael, D-33790 Halle (DE)
(74) Vertreter: Laufhütte, Dieter, Dr.-Ing.
(86) Internationale Anmeldenummer: EP9801725
(87) Internationale Veröffentlichungsnummer: WO98045618

(56) Entgegenhaltungen:
- EP-A- 0 764 797
- WO-A-93/17257
- DE-U- 8 717 016
- DE-U- 8 905 227
- DE-U- 29 705 941
- US-A- 3 924 301
- US-A- 4 049 357

## Beschreibung

Die Erfindung betrifft ein Verbindungselement zur Aufnahme von profilbehafteten Riemenenden.

Bei der Ausführung von begrenzten Stellbewegungen, wie sie beispielsweise beim Öffnen und Schließen von Toren oder beim Betrieb oszillatorische Bewegungen ausführender Maschinen auftreten, werden profilbehaftete Riemen, vorzugsweise Zahnriemen, eingesetzt. Die Verwendung derartiger Riemen weist gegenüber Kettenantrieben den Vorteil einer geringeren Geräuschentwicklung auf. Um den unterschiedlichen Anforderungen an die Länge der einzusetzenden Riemen zu entsprechen, werden üblicherweise endliche Riemen eingesetzt, die leicht auf das gewünschte Maß reduziert werden können. Vor dem Betrieb werden die entsprechenden Riemenenden mit Verbindungselementen miteinander gekoppelt.

Ein derartiges Verbindungselement ist aus dem DE-GM 87 17 016 bekannt. Das offenbarte Verbindungselement umfaßt zwei gegenüberliegende, mit einem negativen Abbild des profilbehafteten Riemenendes versehene Eingreifelemente, in die die Riemenenden eingelegt werden, um eine in Bewegungsrichtung des Riemens formschlüssige Verbindung zu schaffen. Diese Verbindung wird gegen eine Trennung oder ein Verschieben dadurch gesichert, daß auf jedes der Eingreifelemente mit Riemenende eine Hülse aufgeschoben wird. Die Hülse weist derart dimensionierte Innenwandungen auf, daß eine Preßkraft auf Riemenende und Eingreifelement bei aufgeschobener Hülse ausgeübt wird, wodurch nicht nur eine Trennung beider zu verbindender Teile sondern auch ein Lösen der Hülse verhindert werden soll. In dem DE-GM 89 05 227 wird eine Verbindungsvorrichtung offenbart, bei der das Lösen einer aufgeschobenen Hülse dadurch verhindert werden soll, daß die Hülse einen Vorsprung aufweist, der in eine Ringnut des Verbindungselementes eingreift.

Derartige Vorrichtungen weisen den Nachteil auf, daß durch die Vielzahl der benötigten Teile eine Herstellung und Montage verhältnismäßig aufwendig und teuer ist. Ferner besteht das Problem, daß sich beispielsweise aufgrund von Schwingungen oder Temperaturschwankungen im Betrieb die Hülse und somit die Riemenenden von dem Verbindungselement lösen.

Aufgabe der vorliegenden Erfindung ist es, ausgehend von der DE-U-8 717 016, ein Verbindungselement für profilbehaftete Riemenenden zu schaffen, das eine sichere Verbindung gewährleistet und leicht herstellbar und montierbar ist.

Diese Aufgabe wird ausgehend von einer gattungsgemäßen Vorrichtung durch die Merkmale des Anspruchs 1 gelöst. Durch das entsprechende Einfügen des Riemenendes in ein einen derartig ausgestalteten Bereich enthaltendes Teil wird erreicht, daß das aufgenommene Riemenende gegen ein Verschieben oder Trennen nicht nur in Bewegungsrichtung des Riemens, sondern auch in allen Richtungen, die von der Fügerichtung abweichen, gesichert ist. Im montierten Zustand ist das eingeführte Riemenende von zwei Teilen umschlossen, wobei die Teile verbunden werden können, so daß auch ein Verschieben in Fügerichtung ausgeschlossen wird. Durch einen identischen Aufbau der Teile des Verbindungselementes wird die Herstellung und Bereitstellung derartiger Teile vereinfacht und ein problemloser Austausch eines beschädigten Teiles ermöglicht.

Sollen Riemen bzw. Riemenenden mit unterschiedlichen Profilierungen verbunden werden, können die Teile des erfindungsgemäßen Verbindungselementes so ausgestaltet sein, daß entsprechend unterschiedlich profilierte Bereiche zur Aufnahme der Riemenenden vorgesehen sind.

Um ein Zusammenfügen der verbindbaren Teile des Verbindungselementes bei der Montage zu erleichtern, können die Teile Stifte und Stiftlöcher aufweisen. Dabei ist zu jedem Stift auf einem der Teile ein zugehöriges Stiftloch auf einem damit zu verbindenden Teil vorgesehen, wodurch ein exaktes Montieren der Teile möglich ist.

In weiterer Ausgestaltung der Erfindung ist vorgesehen, daß der Außendurchmesser der Stifte und der Innendurchmesser der Stiftlöcher derart ausgeführt sind, daß sowohl beim Zusammenfügen der Teile als auch beim Lösen der Teile Reibungskräfte überwunden werden müssen. Dabei übersteigen diese Reibungskräfte die durch Schwingungen oder Temperaturschwankungen im Betrieb auftretenden Beanspruchungen, wodurch ein Lösen der Teile voneinander und somit ein Lösen des Riemenendes aus dem Verbindungselement verhindert wird.

Die Verbindung der Stifte mit den Stiftlöchem kann durch Stoffschluß gesichert sein. Eine derartige Verbindung kann z.B. dadurch hergestellt werden, daß auf die Stifte vor dem Zusammenfügen eine Klebeschicht aufgebracht wird.

In weiterer Ausgestaltung der vorliegenden Erfindung ist vorgesehen, daß die Teile des Verbindungselementes zur Aufnahme einer Schraube miteinander fluchtende Bohrungen aufweisen. Dabei kann der Innendurchmesser der Bohrungen größer sein als der Außendurchmesser der Schrauben, so daß die Schrauben durch eine Mutter gesichert werden müssen. Liegt der Durchmesser der Bohrung unter dem Außendurchmesser der Schraube, werden zur Verbindungsbildung Schrauben verwendet, die beim Eindrehen ein Gewinde schneiden und somit eine feste Verbindung schaffen. Die Bohrungen können zur Aufnahme entsprechender Schrauben auch mit einem vorgeschnittenen Gewinde versehen sein.

Die Verbindung der Teile des Verbindungselementes durch Schrauben bewirkt, daß die Teile zwar lösbar, jedoch fest miteinander verbunden sind, wodurch ein Verschieben oder Lösen des Riemenendes in Fügerichtung verhindert wird.

Zur weiteren Sicherung der Verbindung der Teile des Verbindungselementes können die Teile flexible Vorsprünge sowie Aussparungen aufweisen, wobei die flexiblen Vorsprünge des einen Teiles in entsprechende Aussparungen des anderen, zu verbindenden Teiles eingreifen. Dadurch wird bereits vor dem Verschrauben der Teile eine stabile Verbindung erreicht.

In weiterer Ausgestaltung der vorliegenden Erfindung ist vorgesehen, daß zum Lösen der Vorsprünge aus den Aussparungen Öffnungen vorgesehen sind, die sich von der Außenseite der Teile des Verbindungselementes zu den Vorsprüngen erstrecken. Dabei sind die Öffnungen derart ausgeführt, daß sie mit den Vorsprüngen fluchten. Soll eine Trennung dieser Verbindung erreicht werden, läßt sich durch die Öffnung beispielsweise ein Schraubenzieher einführen, wodurch die flexiblen Vorsprünge derart gebogen werden, daß der Eingriff in die entsprechenden Aussparungen gelöst wird.

Gemäß einer bevorzugten Ausführungsform der vorliegenden Erfindung ist vorgesehen, daß die eine entsprechende negative Profilierung aufweisenden Bereiche derart ausgestaltet sind, daß sie mit dem Profil des Riemenendes paßgenau übereinstimmen, wodurch ein Kraftschluß in Fügerichtung erreicht wird. Dieser bewirkt zum einen eine Halterung des Riemenendes in den Teilen des Verbindungselementes bei der Montage und zum anderen eine zusätzliche Sicherung gegen das Verschieben des Riemenendes in Fügerichtung.

Das Verbindungselement kann eine Aussparung oder Nut aufweisen, die zur Aufnahme eines Mitnehmers dient. Beispielsweise bei Torantrieben ist dieser Mitnehmer an einem Schlitten montiert, der sich entsprechend der Bewegung des Riemens bewegt und durch eine mechanische Verbindung mit einem Torblatt dessen Öffnen und Schließen bewirkt.

In weiterer Ausgestaltung der vorliegenden Erfindung ist vorgesehen, daß das Verbindungselement im montierten Zustand eine zylindrische Gestalt aufweist und der Außendurchmesser des Zylinders nur geringfügig über der Breite des aufgenommenen Riemens liegt. Diese Ausführungsform weist den Vorteil auf, daß das Verbindungselement auch dann eingesetzt werden kann, wenn nur ein begrenzter Raum zur Verfügung steht, und eine Vorsprünge oder Kanten aufweisende Konstruktion die Bewegung des Riemens bzw. des Verbindungselementes behindern würde.

Weitere Einzelheiten und Vorteile der Erfindung werden anhand eines in der Zeichnung dargestellten Ausführungsbeispiels näher erläutert. In dieser zeigen:

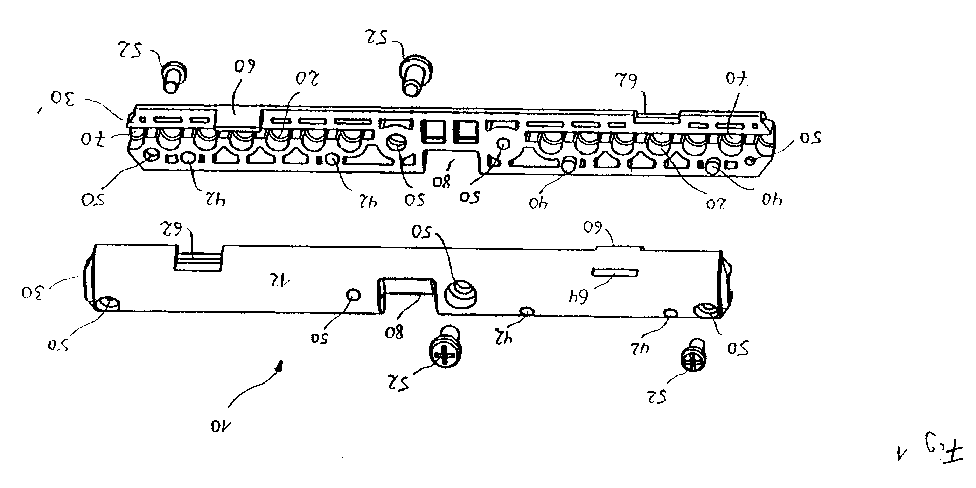

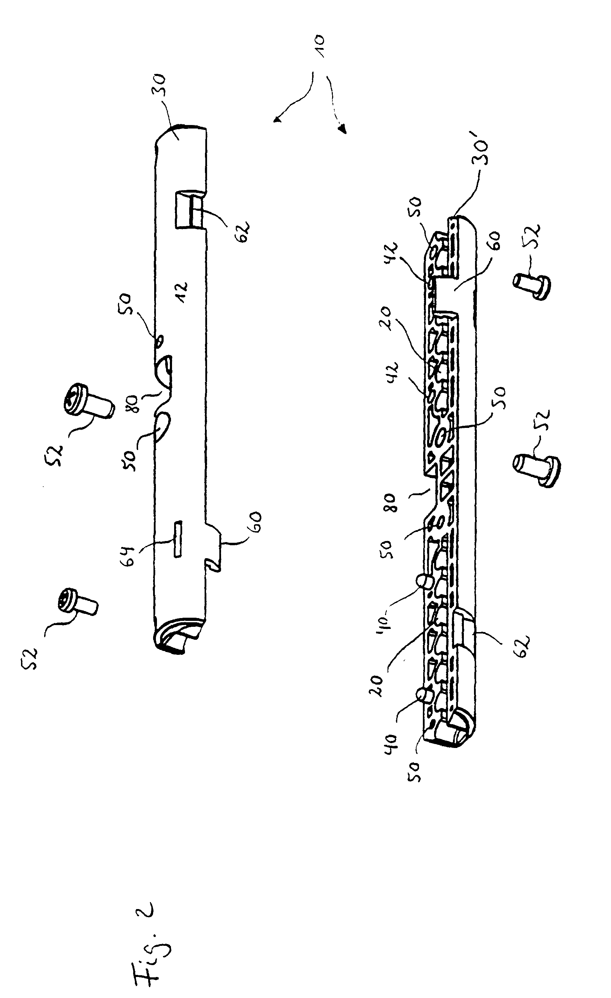

- Fig. 1, Fig. 2: perspektivische auseinandergezogene Ansichten des Verbindungselementes aus unterschiedlichen Betrachtungswinkeln.

Das in Fig. 1 dargestellte Verbindungselement 10 umfaßt die beiden Teile 30 und 30', die nach Einfügen eines oder mehrerer Riemenenden miteinander verbunden werden. Der Riemen bzw. die Riemenenden sind in der Zeichnung nicht dargestellt. Das Teil 30' weist Bereiche 20 auf, die ein negatives Abbild des Profils des Riemenendes umfassen. Das Riemenende wird in den Bereich 20 derart aufgenommen, daß ein Verschieben oder Herausnehmen des Riemenendes aus dem Teil 30' nur in Fügerichtung möglich ist. Entsprechend dem Profil des Riemenendes weisen die Bereiche 20 eine Ebene und eine dieser gegenüberliegende profilierte Seite auf. Die Zähne des Riemens greifen in die profilierte Seite ein, wodurch eine formschlüssige Verbindung in Bewegungsrichtung des Riemens entsteht. Ein Formschluß in allen von der Fügerichtung abweichenden Richtungen wird ferner dadurch erreicht, daß das eingelegte Riemenende auf der der Profilierung gegenüber liegenden Seite durch die ebene Seite des Bereichs 20 begrenzt wird.

Nach Einfügen des Riemenendes wird das Teil 30 auf das Teil 30' aufgesetzt. Das Teil 30 kann ebenfalls ein negatives Abbild des Profils der Riemenenden aufweisende in der Zeichnung nicht dargestellte Bereiche umfassen, um den aus dem Teil 30' überstehenden Rand des Riemenendes aufzunehmen. Wird das Riemenende jedoch in seiner gesamten Breite von dem Teil 30' aufgenommen, weist das Teil 30 keinen profilierten Bereich auf und dient in diesem Fall als Abdeckung. Die Anschläge 70 dienen als seitliche Begrenzung und Führung und gewähren somit ein korrektes Einlegen des Riemenendes.

Das Zusammensetzen der Teile 30 und 30' erfolgt mit Hilfe von Stiften 40 und Stiftlöchern 42, wobei beide Teile 30 und 30' jeweils korrespondierende Stifte 40 und Stiftlöcher 42 aufweisen. Die Stifte 40 und Stiftlöcher 42 dienen als Führung beim Zusammensetzen der Teile 30 und 30' und können darüber hinaus bei entsprechender paßgenauer Ausführung von Innen- und Außendurchmesser der Stifte 40 und der Stiftlöcher 42 eine kraftschlüssige Verbindung sicherstellen.

Die Teile 30 und 30' werden im Betrieb insbesondere dadurch gegen ein Trennen gesichert, daß Schrauben 52 durch Bohrungen 50, die sich durch beide Teile 30 und 30' erstrecken und fluchten, einführbar sind. Dabei wird das Teil 30' durch den Schraubenkopf mittels einer Phase in der Bohrung 50 gehalten, während die Fixierung des Teils 30 über ein beim Eindrehen der Schraube 52 eingeschnittenes Gewinde erfolgt.

Um ein Trennen der Teile 30 und 30' bereits bei der Montage sowie im Betrieb zu verhindern, sind Vorsprünge 60 und Aussparungen 62 vorgesehen, wie dies insbesondere aus Fig. 2 hervorgeht. Die Vorsprünge 60 und Aussparungen 62 erstrecken sich am Außenumfang der Teile 30 und 30', wobei beide Teile jeweils korrespondierende Vorsprünge und Aussparungen aufweisen. Die Vorsprünge 60 sind flexibel ausgeführt und rasten an einer zurückversetzten Kante an ihrem vorderen Ende an einer entsprechenden Kante der Aussparung 62 ein. Bei der Montage wird der flexible Vorsprung 60 nach außen gebogen, bis ein Einrasten in die Aussparung 62 erfolgt. Im montierten Zustand bilden die Vorsprünge 62 mit der Außenseite 12 des Verbindungselementes 10 eine glatte und somit gut handhabbare Fläche. Ein Lösen eines Vorsprungs 60 kann einerseits dadurch erfolgen, daß der Vorsprung 60 von außen über die Kante der Aussparung 62 angehoben wird. Andererseits ist es beispielsweise mittels eines Schraubenziehers möglich, über eine mit dem Vorsprung 60 fluchtende Bohrung 64 ein Verbiegen des Vorsprungs von dessen Innenseite zu erreichen, bis sich die Kanten von Vorsprung 60 und Aussparung 62 nicht mehr berühren und der Vorsprung 60 somit freigegeben wird.

Da die Verbindung mittels Stiften 40, Schrauben 52 sowie Vorsprüngen 62 lösbar ist, kann der Riemen aus dem Verbindungselement ausgebaut und durch eine längere oder kürzere Ausführung ersetzt werden.

An einem Teil des Umfangs des Verbindungselementes 10 erstreckt sich in einem mittleren Bereich der Teile 30 und 30' eine Aussparung 80. Diese dient dazu, einen Mitnehmer beispielsweise eines Schlittens eines Torantriebes aufzunehmen. Dabei greift der Mitnehmer in die Aussparung 80 ein, ist jedoch aus Sicherheitsgründen mit diesem nicht fest verbunden.

Nach dem Einfügen des Riemenendes in die Teile 30 und 30' weist das Verbindungselement 10 eine zylindrische Gestalt auf, wobei der Außendurchmesser des Zylinders die Breite des aufgenommenen Riemens nur geringfügig übersteigt. Diese Anordnung weist insbesondere dann Vorteile auf, wenn für den Riemen nur ein sehr begrenzter Raum zur Verfügung steht, was den Einsatz eines großvolumigen oder abstehende Kanten und Vorsprünge aufweisenden Verbindungselementes ausschließt.

## Patentansprüche

1. Verbindungselement (10) zur Aufnahme von mindestens einem profilbehafteten Riemenende, wobei das Verbindungselement (10) zwei im montierten Zustand das Riemenende umschließende und miteinander verbindbare Teile (30, 30') umfaßt, wobei die Teile (30, 30') Bereiche (20) mit einer dem Profil des Riemenendes entsprechenden negativen Profilierung aufweisen und wobei das Riemenende derart in die Teile (30, 30') einfügbar ist, daß die Verbindung in allen von der Fügerichtung des Riemenendes abweichenden Richtungen formschlüssig ist,
**dadurch gekennzeichnet,**
**daß** die Teile (30, 30') identisch sind.

2. Verbindungselement (10) nach Anspruch 1 , **dadurch gekennzeichnet, daß** die Teile (30, 30') zur Aufnahme von unterschiedliche Profile aufweisenden Riemenenden entsprechend unterschiedliche negativ profilierte Bereiche (20) aufweisen.

3. Verbindungselement (10) nach Anspruch 1 oder 2, **dadurch gekennzeichnet, daß** die Teile (30, 30') des Verbindungselementes (10) Stifte (40) und Stiftlöcher (42) aufweisen, wobei zu jedem Stift (40) auf einem der Teile (30) ein zugehöriges Stiftloch (42) auf dem underen Teil (30') vorhanden ist.

4. Verbindungselement (10) nach Anspruch 3, **dadurch gekennzeichnet, daß** der Außendurchmesser der Stifte (40) und der Innendurchmesser der Stiftlöcher (42) derart aufeinander abgestimmt sind; daß die beim Zusammenfügen und Lösen der Stifte (40) und Stiftlöcher (42) zu überwindenden Reibungskräfte die im Betrieb auftretenden in Richtung der Reibungskräfte wirkenden Beanspruchungen übersteigen.

5. Verbindungselement (10) nach Anspruch 3 oder 4, **dadurch gekennzeichnet, daß** die Stifte (40) in den Stiftlöchern (42) durch Stoffschluß sicherbar sind.

6. Verbindungselement (10) nach einem oder mehreren der Ansprüche 1 bis 5, **dadurch gekennzeichnet, daß** die Teile (30, 30') des Verbindungselementes (10) miteinander fluchtende Bohrungen (50) zur Aufnahme von Schrauben (52) aufweisen.

7. Verbindungselement (10) nach einem oder mehreren der Ansprüche 1 bis 6, **dadurch gekennzeichnet, daß** die Teile (30, 30') des Verbindungselementes (10) flexible Vorsprünge (60) sowie Aussparungen (62) aufweisen, wobei die flexiblen Vorsprünge (60) eines Teils (30) in entsprechende Aussparungen (62) des anderen Teils (30') eingreifen.

8. Verbindungselement (10) nach Anspruch 7, **dadurch gekennzeichnet, daß** zum Lösen der Vorsprünge (60) aus den Aussparungen (62) Öffnungen (64) vorgesehen sind, die sich von der Außenseite (12) der Teile (30, 30') des Verbindungselementes (10) derart zu den Vorsprüngen (60) erstrecken, daß sie mit den Vorsprüngen (60) fluchten.

9. Verbindungselement (10) nach einem oder mehreren der Ansprüche 1 bis 8, **dadurch gekennzeichnet, daß** die Verbindung zwischen eingefügtem Riemenende und den beiden Teilen (30, 30') des Verbindungselementes (10) in Fügerichtung kraftschlüssig ist.

10. Verbindungselement (10) nach einem oder mehreren der Ansprüche 1 bis 9, **dadurch gekennzeichnet, daß** die Bereiche (20) mit negativer Profilierung Anschläge (70) zur seitlichen Führung des Riemenendes aufweisen.

11. Verbindungselement (10) nach einem oder mehreren der Ansprüche 1 bis 10, **dadurch gekennzeichnet, daß** mindestens eine Aussparung (80) oder Nut zur Aufnahme eines Mitnehmers vorgesehen ist.

12. Verbindungselement (10) nach einem oder mehreren der Ansprüche 1 bis 11, **dadurch gekennzeichnet, daß** die Gestalt des Verbindungselementes im montierten Zustand zylindrisch ist, und der Außendurchmesser des Zylinders die Breite des aufgenommenen Riemenendes nur geringfügig übersteigt.

## Claims

1. Connecting element (10) for accommodating at least one profiled belt end, the connecting element (10) comprising two parts (30, 30') which, in the assembled state, enclose the belt end and can be connected to one another, the parts (30, 30') having regions (20) with a negative profiling corresponding to the profile of the belt end, and it being possible for the belt end to be introduced into the parts (30, 30') such that the connection is form-fitting in all directions other than the joining direction of the belt end, **characterized in that** the parts (30, 30') are identical.

2. Connecting element (10) according to Claim 1, **characterized in that** the parts (30, 30'), for accommodating belt ends having different profiles, have correspondingly different negatively profiled regions (20).

3. Connecting element (10) according to Claim 1 or 2, **characterized in that** the parts (30, 30') of the connecting element (10) have pins (40) and pin holes (42), each pin (40) on one of the parts (30) being provided with an associated pin hole (42) on the other part (30').

4. Connecting element (10) according to Claim 3, **characterized in that** the external diameter of the pins (40) and the internal diameter of the pin holes (42) are co-ordinated with one another such that the frictional forces which are to be overcome when the pins (40) and pin holes (42) are joined together and released exceed the stressing acting in the direction of the frictional forces during operation.

5. Connecting element (10) according to Claim 3 or 4, **characterized in that** the pins (40) can be secured in the pin holes (42) by an integral connection.

6. Connecting element (10) according to one or more of Claims 1 to 5, **characterized in that** the parts (30, 30') of the connecting element (10) have aligned bores (50) for accommodating screws (52).

7. Connecting element (10) according to one or more of Claims 1 to 6, **characterized in that** the parts (30, 30') of the connecting element (10) have flexible protrusions (60) and recesses (62), the flexible protrusions (60) of one part (30) engaging in corresponding recesses (62) of the other part (30').

8. Connecting element (10) according to Claim 7, **characterized in that** provided for the purpose of releasing the protrusions (60) from the recesses (62) are openings (64) which extend from the outside (12) of the parts (30, 30') of the connecting element (10) to the protrusions (60) such that they are aligned with the protrusions (60).

9. Connecting element (10) according to one or more of Claims 1 to 8, **characterized in that** the connection between the introduced belt end and the two parts (30, 30') of the connecting element (10) is force-fitting in the joining direction.

10. Connecting element (10) according to one or more of Claims 1 to 9, **characterized in that** the regions (20) with negative profiling have stops (70) for the lateral guidance of the belt end.

11. Connecting element (10) according to one or more of Claims 1 to 10, **characterized in that** at least one recess (80) or groove is provided for accommodating a driver.

12. Connecting element (10) according to one or more of Claims 1 to 11, **characterized in that** the connecting element is of cylindrical configuration in the assembled state, and the external diameter of the cylinder exceeds the width of the accommodated belt end only to a slight extent.

## Revendications

1. Elément d'assemblage (10) pour la fixation d'au moins une extrémité de courroie à profil altéré, moyennant quoi l'élément d'assemblage (10) comprend deux pièces (30, 30') entourant l'extrémité de courroie et raccordables l'une à l'autre à l'état monté, moyennant quoi les pièces (30, 30') comportent des zones (20) avec un profilage négatif correspondant au profil de l'extrémité de courroie et moyennant quoi l'extrémité de courroie peut être insérée dans les pièces (30, 30') de manière à ce que l'assemblage soit solidaire dans toutes les directions divergeant de la direction d'assemblage de l'extrémité de courroie,
**caractérisé en ce que**
les pièces (30, 30') sont identiques.

2. Elément d'assemblage (10) selon la revendication 1,
**caractérisé en ce que** les pièces (30, 30') pour la fixation d'extrémités de courroie présentant des profils différents comportent différentes zones (20) profilées négativement de manière appropriée.

3. Elément d'assemblage (10) selon la revendication 1 ou 2, **caractérisé en ce que** les pièces (30, 30') de l'élément d'assemblage (10) comportent des chevilles (40) et des trous de chevilles (42), de telle manière que, pour chaque cheville (40) sur l'une des pièces (30), un trou de cheville associé (42) est prévu sur l'autre pièce (30').

4. Elément d'assemblage (10) selon la revendication 3, **caractérisé en ce que** le diamètre extérieur des chevilles (40) et le diamètre intérieur des trous de chevilles (42) sont ajustés l'un par rapport à l'autre de manière à ce que les forces de friction à surmonter lors de l'assemblage et du desserrage des chevilles (40) et des trous de chevilles (42) excèdent les contraintes s'exerçant en fonctionnement dans la direction des forces de friction.

5. Elément d'assemblage (10) selon la revendication 3 ou 4, **caractérisé en ce que** les chevilles (40) dans les trous de chevilles (42) peuvent être bloquées par fermeture de matière.

6. Elément d'assemblage (10) selon une ou plusieurs des revendications 1 à 5, **caractérisé en ce que** les pièces (30, 30') de l'élément d'assemblage (10) comportent des alésages (50) alignés les uns sur les autres pour la fixation de vis (52).

7. Elément d'assemblage (10) selon une ou plusieurs des revendications 1 à 6, **caractérisé en ce que** les pièces (30, 30') de l'élément d'assemblage (10) comportent des épaulements souples (60) ainsi que des évidements (62), les épaulements souples (60) d'une pièce (30) s'engrenant dans les évidements (62) correspondants de l'autre pièce (30').

8. Elément d'assemblage (10) selon la revendication 7, **caractérisé en ce que**, pour détacher les épaulements (60) des évidements (62), il est prévu des ouvertures (64) qui s'étendent depuis le côté extérieur (12) des pièces (30, 30') de l'élément d'assemblage (10) jusqu'aux épaulements (60) de manière à être alignées sur les épaulements (60).

9. Elément d'assemblage (10) selon une ou plusieurs des revendications 1 à 8, **caractérisé en ce que** l'assemblage entre l'extrémité de courroie insérée et les deux pièces (30, 30') de l'élément d'assemblage (10) se fait par adhérence dans la direction d'assemblage.

10. Elément d'assemblage (10) selon une ou plusieurs des revendications 1 à 9, **caractérisé en ce que** les zones (20) avec un profilage négatif comportent des butées (70) pour le guidage latéral de l'extrémité de courroie.

11. Elément d'assemblage (10) selon une ou plusieurs des revendications 1 à 10, **caractérisé en ce qu'**au moins un évidement (80) ou une rainure est prévu pour la fixation d'un doigt d'entraînement.

12. Elément d'assemblage (10) selon une ou plusieurs des revendications 1 à 11, **caractérisé en ce que** la configuration de l'élément d'assemblage à l'état monté est cylindrique et **en ce que** le diamètre extérieur du cylindre excède seulement légèrement la largeur de l'extrémité de courroie fixée.
